# EUROPEAN PATENT SPECIFICATION

(11) **EP 4 525 623 B1**
(45) Date of publication and mention of the grant of the patent: **06.05.2026**
(21) Application number: 23724948.7
(22) Date of filing: 15.05.2023
(51) Int. Cl.: A21B 1/48, A21B 3/04

(54) **METHOD FOR CONTROLLING A TUNNEL OVEN AND TUNNEL OVEN WITH FLOW CONTROL**
VERFAHREN ZUR STEUERUNG EINES TUNNELOFENS UND TUNNELOFEN MIT STRÖMUNGSSTEUERUNG
PROCÉDÉ DE COMMANDE D'UN FOUR TUNNEL ET FOUR TUNNEL AVEC RÉGULATION DE DÉBIT

(30) Priority: 16.05.2022 NL 2031867
(43) Date of publication of application: 26.03.2025
(73) Proprietor: Kaak Groep B.V., 7061 GA Terborg (NL)
(72) Inventor: VEROUDEN, Franciscus Quirinus Fredrik, 7061 GA Terborg (NL); VAN WEZEL, Michel Martinus Willem, 7061 GA Terborg (NL); REULING, Mathijs Cornelis Theodorus, 7061 GA Terborg (NL); KOKKOTI, Maria, 7061 GA Terborg (NL)
(74) Representative: Peters, Sebastian Martinus
(86) International application number: PCT/NL2023/050269
(87) International publication number: WO 2023/224473

(56) References cited:
- DE-A1- 2 201 884
- SU-A1- 1 163 819
- US-A- 4 569 658
- US-A1- 2018 213 801

## Description

### BACKGROUND

The invention relates to a tunnel oven for the preparation of food products, in particular for baking dough product. Furthermore, the invention relates to a method for controlling a tunnel oven for the preparation of food products, in particular for baking dough products.

For the preparation of food products, in particular dough products, in an industrial setting, use is made of large elongated ovens with an open entrance on one end and an open exit on the opposite end of the elongated oven. Such ovens are more commonly referred to as tunnel ovens. In these tunnel ovens, food products are continuously conveyed through the tunnel oven during which the food products are baked and/or cooked as the food products travel along the length of the tunnel oven.

In particular for baking dough products such as bread, rolls, buns, baguettes, Parisian bread, round breads, ciabatta, pizza bottoms, pancakes, pastries, etc., the preparation requires an addition of a pretreatment agent, such as moisture, to the food products before they are baked and/or cooked. This addition of moisture is usually achieved by exposing the food products to steam in a pretreatment zone just after the entrance of the tunnel oven, such that the food products travel through the pretreatment zone before entering a baking chamber of the tunnel oven.

Furthermore, tunnel ovens are commonly provided with an exhaust, commonly arranged in a part of the tunnel oven close to the exit, in order to extract gasses and/or moisture from the baking chamber.

A disadvantage of the known tunnel ovens is, that together with the gasses and/or moisture extracted from the tunnel oven via the exhaust, a considerable amount of energy is also extracted out of the tunnel oven. In order to increase the energy efficiency of a tunnel oven, heat exchangers can be installed in the duct of the exhaust to reclaim part of the heat energy in the extracted gasses. In addition or alternatively, excess steam in the oven which would be extracted from the tunnel oven via the exhaust, may at least partially be recovered and after appropriate treatment with respect to pressure and temperature, may be recirculated as fresh steam in the pretreatment zone.

Known tunnel ovens are described in SU 1163819 A, US 4,569,658 A and DE 2 201 884 A1.

### SUMMARY OF THE INVENTION

It is an object of the present invention to provide a novel and alternative method for controlling a tunnel oven, and a tunnel oven comprising a flow control for providing a reduced energy consumption.

According to a first aspect, the present invention provides a tunnel oven for the preparation of food product, in particular dough products, wherein the tunnel oven comprises:
a tunnel oven entrance, a tunnel oven exit and a baking zone inside said tunnel oven between the tunnel oven entrance and the tunnel oven exit,
a transport device configured for transporting food products through the tunnel oven entrance, the backing zone and the tunnel oven exit,
a heating source arranged for providing heat to food products in the baking zone,
a pretreatment zone, arranged between the baking zone and the tunnel oven entrance, wherein the pretreatment zone comprises an injector configured for injecting a pretreatment agent into the pretreatment zone,
an air exhaust configured for extracting air from the baking zone, wherein the air exhaust comprises a flow regulator and a sensor for detecting the presence and/or an amount of pretreatment agent in the air exhaust, and
a control device configured for receiving a signal from said sensor, and configured for controlling the flow regulator in the air exhaust based on said signal.

In stead of or in addition to reclaiming at least part of the energy in the gasses and/or steam extracted from the tunnel oven, the present invention aims to reduce the amount of gasses and/or steam extracted from the tunnel oven, by providing a flow regulator and a sensor in the air exhaust and controlling the flow regulator based on a signal from said sensor.

It is noted that during operation of the known tunnel ovens, the combination of an open entrance and an open exit of the tunnel oven, and the extraction of gasses and/or moisture via the exhaust, results in a draft of ambient air through both the entrance and exit in order to replace the air extracted from the baking chamber via the exhaust. The draft via the entrance and the pretreatment zone, takes along some of the pretreatment agent, such as steam, from the pretreatment zone, into the baking zone, which pretreatment agent is then also present in the air extracted from the baking zone via the air exhaust and is detected by the sensor.

The present invention is based on the insight that, when an amount of pretreatment agent is detected in the air extracted from the baking zone via the air exhaust, the rate of extraction of air via the air exhaust can be reduced by controlling the flow regulator in the air exhaust. A reduced air flow out the air exhaust also reduces a loss of energy via the exhausted air, and due to the reduced loss of energy less energy is required to operate the tunnel oven, which then leads to a reduced energy consumption.

In an embodiment, the flow regulator comprises an exhauster, preferably a motor-driven fan. When the air exhaust of the tunnel oven comprises a motor-driven fan, a flow rate of air out of the tunnel oven can be regulated by adjusting a rotational speed of the fan and/or a pitch of the blades of the fan.

In addition or alternatively, in an embodiment, the flow regulator comprises a regulating valve. Such a regulating valve comprises a valve opening, and a flow rate of air out of the tunnel oven can be regulated by adjusting the regulating valve to at least partially opening or closing the valve opening. It is noted that a regulating valve may be combined with an exhauster in the air exhaust of the tunnel oven, but may also be combined with an air exhaust of the tunnel oven that uses the natural draft of a chimney.

Although the sensor may be arranged in the tunnel oven, preferably close to or in an connecting opening where the air exhaust debouches in the baking zone of the tunnel oven, in an embodiment, the sensor is preferably arranged in a duct of the air exhaust, between the flow regulator and the connecting opening of said duct into the baking zone. This preferred position of the sensor provides a more accurate detection of the presence of pretreatment agent in the air inside the air exhaust.

In an embodiment, the sensor a dew point sensor, a humidity sensor and/or a combination of a wet-bulb temperature sensor and a dry-bulb temperature sensor. These types of sensors provide a measure of the moisture in the air or humidity of the air, and are particularly suitable when the pretreatment agent comprises steam.

It is noted that when the food product comprises a dough product, such as bread, rolls, buns, baguettes, Parisian bread, round breads, ciabatta, pizza bottoms, pancakes, pastries, etc., the food product will also release some moisture during the cooking or baking process in the tunnel oven. Accordingly, not only any steam from the pretreatment zone, but also the moisture released by the food product changes the dew point and the humidity of the air in the baking chamber, which may interfere with the detection of pretreatment agent when said pretreatment agent comprises steam. In such a situation, the sensor for detecting the presence of pretreatment agent in the air exhaust is preferably configured for measuring an amount of moisture in the air and/or a quantity derived from the amount of moisture in the air, such as the dew point.

Accordingly, the moisture released by the food products provides a certain offset of the humidity and/or dew point in the air at or in the air exhaust, and in case that the humidity and/or the dew point exceeds this offset then an amount of pretreatment agent is detected in the air extracted from the baking zone via the air exhaust, and the rate of extraction of air via the air exhaust can be reduced by controlling the flow regulator in the air exhaust.

It is noted that this offset of the humidity and/or dew point depends, *inter alia,* on the specific dough products, the recipe of the dough product, and the capacity and/or loading of the tunnel oven (amount of dough products per hour that are cooked and/or baked in the tunnel oven). Accordingly, when using a threshold value to establish whether or not the humidity and/or dew point is above said offset, the threshold value is preferably adjustable.

In an embodiment, the pretreatment zone comprises an air resistance inducing unit configured for providing a resistance against air flow from the tunnel oven entrance, through the pretreatment zone, towards the baking zone. Due to the air resistance inducing unit in front of, after and/or in the pretreatment zone, the air flow from the tunnel oven entrance, through the pretreatment zone, towards the baking zone is strongly reduced. By reducing the air flow from the pretreatment zone into the baking zone, also a flow of pretreatment agent, such as steam, from the pretreatment zone into the baking zone is reduced. Accordingly, the air resistance inducing unit substantially prevents a free flow of pretreatment agent into the baking zone, and thereby into the air exhaust. The air resistance inducing unit reduces the loss of pretreatment agent, such as steam, via the air exhaust and thereby reduces a loss of energy via the exhausted air, and due to the reduced loss of energy less energy is required to operate the tunnel oven, which then leads to a reduced energy consumption.

In an embodiment, the pretreatment zone comprises a bottom wall, a top wall and two side walls which surround a part of the transport device that is configured for transporting the food products through the pretreatment zone of the tunnel oven, wherein the air resistance inducing unit comprises at least one baffle or curtain, wherein said at least one baffle or curtain is arranged to extend in a direction substantially perpendicular to a transport direction of the transport device, preferably wherein said at least one baffle or curtain is connected to said top wall, and wherein said at least one curtain extends from the top wall towards said part of the transport device. Accordingly, the air resistance inducing unit is configured to provide a resistance against air flow from the external environment through the tunnel section. This is at least partially achieved by the generation of turbulence in the incoming air and/or by providing a physical barrier, which results in an increased resistance against the flow of air through the pretreatment zone.

Preferably, the at least one curtain is made from a flexible and/or pliable material. When a food product and/or a holder for a food product, such as a baking tray, would inadvertently collide with said at least one curtain, said curtain can flex or bend out of the way to allow the food product and/or the holder for a food product to pass along. Accordingly, by using at least one curtain in the pretreatment zone as an air resistance inducing balancing unit, a congestion or blocking of the tunnel oven due to an inadvertent collision and any downtime for removing the congestion in the tunnel oven, can substantially be avoided. The flexible and/or pliable curtain also allow to configure the curtains such that an edge of said plurality of curtains facing towards the transport device, in use, is much closer to the food product and/or the holder for a food product, at least when compared to substantially rigid baffles. The smaller gap between the edge of the curtains and the food product and/or holder for the food product can provide an increased resistance against air flow from the tunnel oven entrance towards the baking section.

In an embodiment, said at least one baffle or curtain comprises a cut-out at the side facing away from the top wall, wherein the curtain part adjacent to said cut-out reaches to a position near or touching an upper side of the transport device. Due to the cut-out, the baffle or curtain can reach down to the upper side of the transport device at positions adjacent to the intended path of the food products and/or holders for food products traversing the tunnel oven, which, in use, can substantially block an air flow in between and/or adjacent to the food products and/or holders for food products to a large extend. Accordingly, the parts of the baffle or curtain between or adjacent to the cut-outs provide an increased resistance against air flow from the tunnel oven entrance towards the baking section.

In an embodiment, said cut-out in said at least one baffle or curtain is configured to allow a substantially un-obstructed passage of the dough products and/or the holders for the dough products, such as baking tins, and/or wherein said cut-out is configured such that a gap between an edge the at least one curtain in the cut-out and the upper side of said transport device is in a range of 80 - 140 mm. In particular, the distance between the upper side of said part of the transport device and the distal end of the one or more curtains is chosen to be large enough to allow an un-obstructed passage of the dough products and/or the holders for the dough products, such as baking tins.

In an embodiment, said at least one curtain comprises multiple strips which are arranged adjacently in the direction substantially perpendicular to the transport direction of the transport device. In an embodiment, a width of two or more strips of said multiple strips is substantially the same in the direction substantially perpendicular to the transport direction of the transport device. The multiple strips that are arranged adjacently in the direction substantially parallel to the width direction of the tunnel oven together provide a substantially closed curtain surface to provide the resistance against air flow. In addition, the multiple strips can more easily move out of the way of objects on the transport device, and only opens to the size of the object on the transport device. Where there is no object on the transport device, the strips stay in their original position to provide a substantially closed surface to maintain the resistance against air flow.

In an embodiment, said at least one curtain comprises a series of cuts which extend in a substantially vertical direction and wherein said cuts are arranged spaced apart in a direction substantially perpendicular to the transport direction of the transport device. In an embodiment, a distance between adjacent cuts of said series of cuts in a direction substantially perpendicular to the transport direction of the transport device, is substantially the same. The series of cuts are at least provided at the side of the curtain that faces the transport device. The series of cuts divides at least the part of the curtain adjacent to the transport device in a series of strips of curtain between adjacent cuts, which strips provide substantially the same advantages as discussed in relation to the previous embodiment.

In an embodiment, said the air resistance inducing unit, comprises a plurality of baffles or curtains arranged inside said pretreatment zone, wherein said plurality of curtains are arranged spaced apart in a direction from the tunnel oven entrance and towards the baking zone. By using a plurality of baffles or curtains the air resistance for air flowing from the tunnel oven entrance, through the pretreatment zone, and into the baking zone is further increased.

In an embodiment, said bottom wall is provided with one or more baffles, wherein said one or more baffles are connected to the bottom wall with a proximal end thereof, wherein a distal end of said one or more baffles, opposite to the proximal end, is arranged near to a bottom side of said part of the transport device, preferably wherein a distance between the bottom side of said part of the transport device and the distal end of the one or more baffles is in a range of 10 - 50 mm. Due to the relatively small distance between the bottom side of said part of the transport device and the distal end of the one or more baffles, the generation and/or effectivity of turbulence in the incoming air is enhanced, which results in an enhanced resistance against the flow of air through the pretreatment zone, at least along the bottom side of said part of the transport device.

In an embodiment, the pretreatment zone is not provided with an air exhaust, in particular the pretreatment zone is not provided with an air exhaust at or near the top wall of the pretreatment zone. Preferably, the air exhaust for extracting air from the baking zone is arranged spaced apart from the pretreatment zone, preferably spaced apart over a distance equal or greater than 20% of the total length of the baking zone, more preferably equal or greater than 30% of the total length of the baking zone. An advantage of this embodiment is, that the pretreatment agent is not or at least to a lesser extent extracted from the pretreatment zone, at least not via an air exhaust, and thereby, when in use, the amount of pretreatment agent used in the tunnel oven can be reduced. In particular when the pretreatment agent comprises steam, a reduction of the amount of steam used in the tunnel oven yield a large energy saving, since steam requires a relatively large amount of energy for its production.

According to a second aspect, the present invention provides method for controlling a tunnel oven according to the first aspect of the present invention or an embodiment thereof as described above, wherein the method comprises the steps of:
- sending a signal that corresponds to a detection of pretreatment agent inside the air exhaust from the sensor to the control device;
- controlling the flow regulator in the air exhaust by means of the control device, wherein said controlling is based on said signal.

In embodiment, the control device compares the signal with a threshold value, and when the signal is larger than the threshold value, the control device controls the flow regulator for reducing an air flow in the air exhaust.

In an embodiment, the flow regulator comprises a motor-driven fan, and wherein the step of controlling the flow regulator comprises a step of adjusting a rotational speed of the fan and/or a pitch of the blades of the fan.

In an embodiment, the flow regulator comprises a regulating valve comprising a valve opening, and wherein the step of controlling the flow regulator comprises a step of adjusting the valve opening.

In an embodiment where the pretreatment agent comprises steam, the sensor comprises a dew point, temperature and/or humidity sensor.

According to a third aspect, the present invention provides a computer-readable medium, preferably a non-transitory computer-readable medium, comprising computer-executable instructions adapted to cause a control device of a tunnel oven that comprises a computer, to perform the method according to the second aspect of the invention.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a schematic cross-section in a longitudinal direction of first example of a tunnel oven of the present invention;
Figure 2 shows a schematic cross-section of a second example of a tunnel oven of the present invention, in particular with an air resistance inducing unit arranged in the pretreatment zone of the tunnel oven, comprising a plurality of substantially rigid baffles;
Figure 3 shows a schematic cross-section of a third example of a tunnel oven of the present invention, in particular with an air resistance inducing unit arranged in the pretreatment zone of the tunnel oven, comprising a plurality of curtains; and
Figure 4 shows a schematic cross-section of the tunnel oven of figure 3 along the line IV-IV.

### DETAILED DESCRIPTION OF THE INVENTION

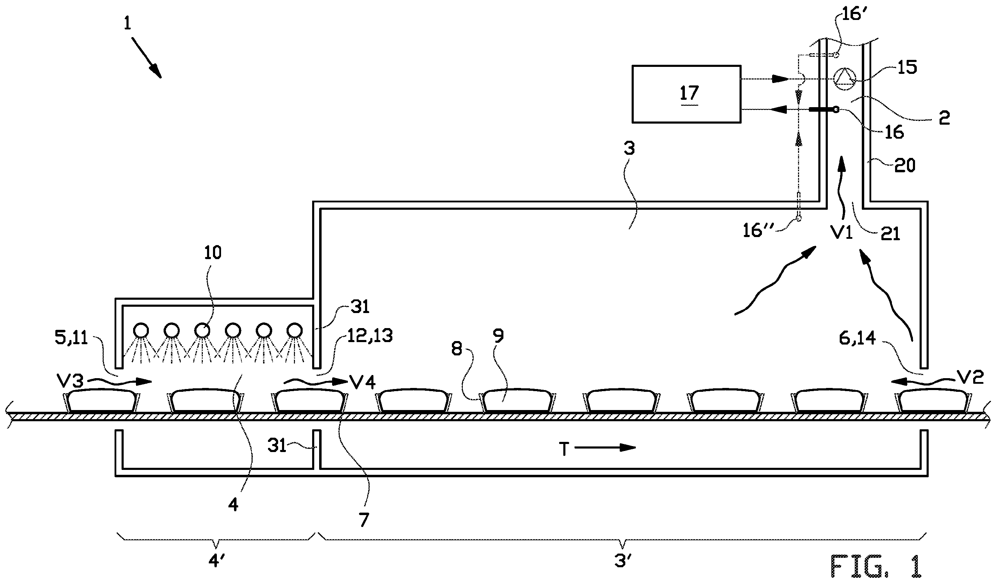

Figure 1 schematically shows a first example of a tunnel oven 1. Said tunnel oven 1 comprises a tunnel oven entrance 5 and a tunnel oven exit 6. Adjacent to the tunnel oven entrance, the tunnel oven 1 according to this example comprises a pretreatment chamber 4, wherein the pretreatment chamber 4 comprises a first entrance 11 and a first exit 12. The first entrance 11 is connected to, and in this case coincides, with the tunnel oven entrance 5. The first exit 12 connects to, and in this case coincides, with a second entrance 13 of a baking chamber 3. The pretreatment chamber 4 constitutes or forms a pretreatment zone 4', and the first exit 12 and the second entrance 13 constitute or form a transition between the pretreatment zone 4' and the baking zone 3'**.** The pretreatment chamber 4 further comprises a multitude of injectors 10 configured for injecting a pretreatment agent into the pretreatment chamber 4, preferably towards food products inside the pretreatment chamber 4.

The addition of a pretreatment agent to food products 9 before the food products 9 enter the baking chamber 3 may increase the quality of the food product 9 and/or may assist the baking process. In some cases, the preparation of the food products 9 requires an addition of a pretreatment agent.

The most common pretreatment agent used in the baking process of bread is steam. For example, in the case of bread products, the addition of steam as the pretreatment agent may improve the texture of the crust of the final dough product. In the following we only discuss steam as the pretreatment agent. However, the pretreatment agents are not limited to steam, and other pretreatment agents can also be used in the tunnel oven of the present invention.

Adjacent to the pretreatment chamber 4, the tunnel oven 1 comprises a baking chamber 3 with a second entrance 13 and a second exit 14, wherein the second exit 14 connects to and in this example coincides with the tunnel exit 6. The baking chamber 3 constitutes or forms a baking zone 3'. The baking chamber 3 further comprises an air exhaust 2 configured for extracting air from the baking chamber 3, at least when the tunnel oven is in use. The air exhaust 2 may comprise an exhauster 15 which commonly comprises an air fan or a blower, which allows a more active and controlled removal of air out of the baking chamber 3. It is noted that the air extraction via the air exhaust 2 may also be provided by the natural draft obtained when the air exhaust 2 is connected to a chimney.

As schematically shown in figure 1, the air exhaust 2 is arranged at a position towards or close to the tunnel oven exit 6. The baking chamber 3 is preferably elongated and having a tunnel-like shape, wherein a length of the baking chamber 3 typically significantly exceeds a height/width of the baking chamber 3. The baking chamber 3, although not shown, will commonly comprise one or more heat sources for controlling and/or increasing a temperature in the baking chamber 3.

The tunnel oven as shown in Figure 1 further comprises a transport device 7 which is configured for transporting several baking trays 8 containing food products 9, in particular dough pieces for making bread, through the tunnel oven 1. The transport device 7 is configured for transporting the to be baked products along a transport direction T into the tunnel oven entrance 5, through the pretreatment chamber 4, through the baking chamber 3, and out of the tunnel oven exit 6. Preferably, the transport device 7 comprises a conveyor, preferably comprising a belt conveyor which comprises a heat-resistant conveyor belt, which preferably has an open structure to allow air to pass through the conveyor belt.

Such a tunnel oven 1 can be used for baking and/or cooking food products 9 in an industrial setting, and allows to transport or convey the food products 9 in a substantially continuous manner through the tunnel oven 1, during which the food products 9 are subjected to heat in order to prepare said food products 9. As a result of the continuous operation of the tunnel oven 1, the tunnel entrance 5 and the tunnel exit 14 are kept continuously open during operation of the tunnel oven.

The air exhaust 2, as shown in figure 1, is used to remove gasses from the baking chamber 3, in particular gasses that are produced for example by the heated food products 9. However, the removal of air V1 from the baking chamber 3 results in a reduction in the air pressure in the baking chamber 3 compared to an external ambient environment of the tunnel oven 1. This pressure difference results in a flow of air V2 from the external environment through the tunnel oven exit 6 into the baking chamber 3, and in a flow of air V3, V4 from the external environment through the tunnel oven entrance 5 and the pretreatment chamber 4 into the baking chamber 3.

The flow V3, V4 of air through the pretreatment chamber 4 will take along some of the pretreatment agent, which pretreatment agent will also then be part of the removed air V1 via the air exhaust 2.

According to the invention, the air exhaust 2 comprises a sensor 16 which is configured for detecting the pretreatment agent in the removed air V1. When the sensor 16 detects pretreatment agent, in particular when the sensor 16 detects a large amount of pretreatment agent, the rate of air removal via the air exhaust 2 is considered to be unnecessarily large. Accordingly, when the control device 17 receives a signal from the sensor 16 that pretreatment agent or a large amount of pretreatment agent has been detected, the control device 17 controls the flow regulator in the air exhaust, in this example the air fan 15, in order to reduce the rate of air extraction via the air exhaust 2. A reduced air flow V1 out the air exhaust 2 also reduces a loss of energy via the exhausted air, and due to the reduced loss of energy less energy is required to operate the tunnel oven 1, which then leads to a reduced energy consumption.

In addition, due to the reduced air flow V1, also the air flow V3, V4 in and through the pretreatment chamber 4 is also reduced, and accordingly less pretreatment agent moves into the baking chamber 3 and towards the air exhaust 2, and the sensor 16 detects less or substantially no pretreatment agent. As soon as the sensor 16 detects less or substantially no pretreatment agent, the control device 17 no longer controls the air fan 15 to further reduce the rate of air extraction, and preferably keeps the rate or air extraction on constant (low) level.

The reduced air flow V3, V4 in and through the pretreatment chamber 4 also provides a more controlled environment in the pretreatment chamber 4. This more controlled environment provides a more controlled pretreatment process in the pretreatment chamber 4.

In the example of figure 1, the sensor 16 is arranged in a duct 20 of the air exhaust 2, between the air fan 15 and a mouth 21 of the air exhaust 2 in the top wall of the baking chamber 3. Accordingly, when the air fan 15 is activated for removing air V1 from the baking chamber 3, the sensor 16 is arranged upstream with respect to the air fan 15.

In addition or alternatively, the sensor 16' may also be arranged in the duct 20 of the air exhaust 2, at a side of the air fan 15 facing away from the mouth 21 of the air exhaust 2. Accordingly, when the air fan 15 is activated for removing air V1 from the baking chamber 3, the sensor 16' is arranged downstream with respect to the air fan 15, as schematically indicated with the dotted line in figure 1.

In addition or alternatively, the sensor 16" may also be arranged in the baking chamber 3, preferably near the mouth 21 of the air exhaust 2, as schematically indicated with the dotted line in figure 1.

It is noted that when the pretreatment agent comprises steam, the sensor preferably comprises a dew point sensor, a temperature sensor and/or a humidity sensor.

It is further noted that in this example and in the further examples below, the control device 17 may also be configured for controlling other elements of the tunnel oven 1, such as the speed of the transport device 7, the amount of pretreatment agent injected in the pretreatment chamber 4 by the multitude of injectors 10, the heaters (not shown) for heating the food products 9 in the baking chamber 3, etc.

It is further noted that the pretreatment chamber 4 and the baking chamber 3 can be accommodated in a single housing of the tunnel oven 1, and thus both the pretreatment chamber 4 and the baking chamber 3 form an integral part of the tunnel oven 1. Furthermore, the pretreatment zone 4' and the baking zone 3' can be accommodated in a single chamber, thus without a separating wall 31 between the pretreatment zone 4' and the baking zone 3'.

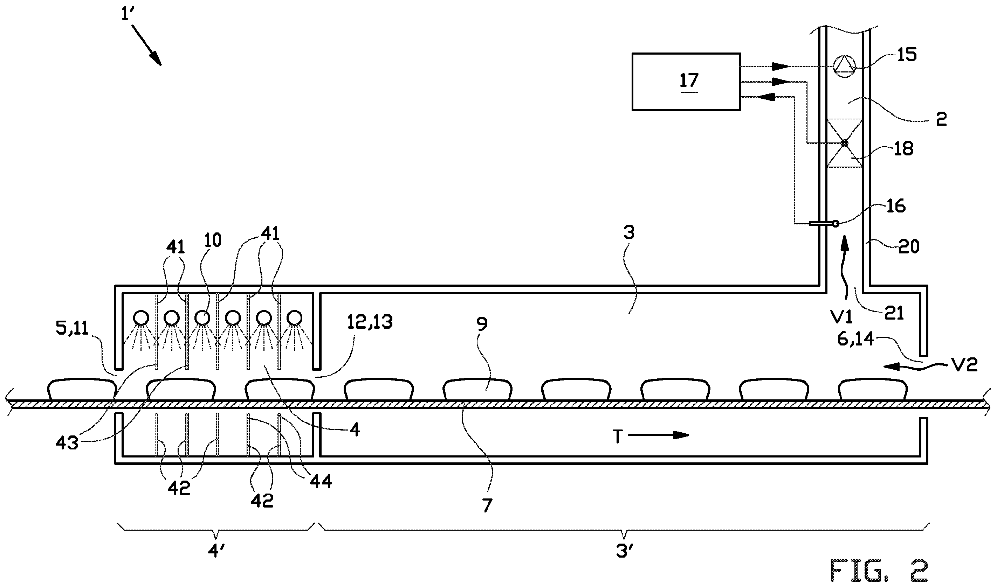

Figure 2 illustrates another example of a tunnel oven 1' based on a tunnel oven design substantially similar to the tunnel oven 1 as shown in figure 1. Corresponding features of the tunnel oven 1' of this example with respect to the tunnel oven 1 of figure 1 are indicated with the same reference numerals.

In the example of figure 2, the air exhaust 2 is provided with flow regulator which comprises both a motor driven air fan 15 and a regulating valve 18. One or both of the air fan 15 and the regulating valve 18 can be used to adjust the flow rate of the air V1 in the air exhaust 2, as controlled by the control device 17 based on a signal from the sensor 16. It is noted that in this example, the regulating valve 18 is arranged in the duct 20 of the air exhaust 2, between the air fan 15 and the mouth 21 of the air exhaust 2 in the baking chamber 3. However, in an alternative example, the air fan 15 may be arranged between the regulating valve 18 and the mouth 21 of the air exhaust 2 in the baking chamber 3.

In addition, figure 2 illustrates an example wherein the tunnel oven 1' comprises an air resistance inducing unit arranged inside the pretreatment chamber 4. The air resistance inducing unit inside the pretreatment chamber 4 comprises a plurality of baffles 41 positioned at least above the transport device 7. Preferably, the air resistance inducing unit inside the pretreatment chamber 4 comprises a plurality of baffles 42 positioned below the transport device 7.

It is noted that the baffles 41 above the transport device 7 are designed and optimized in order to provide the desired air resistance when food products 9 or holders for food products are present on the transport device 7. Preferably, these baffles 41 are configured so that a distance between an upper side of the food products 9 or holders for food products and an edge 43 of the baffles 41 facing the transport device 7 is 40 mm or less, however the distance between the edges 43 of the baffles 41 and the upper surface of the transport device 7 must be large enough to allow an unhindered passage of the food products 9 and/or holders for food products. In addition, the baffles 41 are suitably arranged in order to allow that the pretreatment agent, such as steam, as provided via the injectors 10 can suitably interact with the food products 9 in the pretreatment chamber 4.

In this example, the baffles 41, 42 typically spans or extends over substantially the whole width of the pretreatment chamber 4. The plurality of baffles 41, 42 are spaced apart along a transport direction T of the transport device 7, and extend along a substantially horizontal direction, perpendicular to the transport direction T.

Due to the baffles 41, 42 in the pretreatment chamber 4, there is a reduced propensity for air to flow from the external environment through the first entrance 11 into the pretreatment chamber 4. By suitably configuring the baffles 41, 42, to provide a suitable air resistance, the inflow of ambient air into the first entrance 11 of the pretreatment chamber 4 can be reduced or substantially avoided. Accordingly, a disturbance of the pretreatment zone 4' is at least reduced and preferably is avoided.

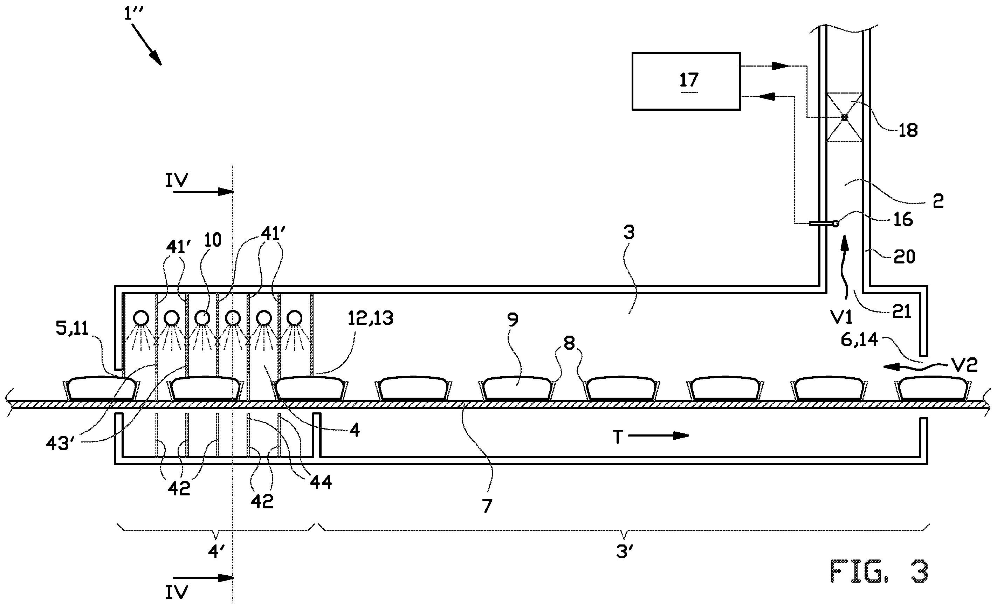

Figure 3 illustrates another example of a tunnel oven 1" based on a tunnel oven design substantially similar to the tunnel oven 1 as shown in figure 1.

In the example of figure 3, the air exhaust 2 is provided with flow regulator which comprises a regulating valve 18. In particular, the air exhaust 2 of this example uses the natural draft of a chimney for removing air V1 from the baking chamber 3. The regulating valve 18 can be used to adjust the flow rate of the air V1 in the air exhaust 2, as controlled by the control device 17 based on a signal from the sensor 16.

In addition, figure 3 illustrates an example wherein the tunnel oven 1" comprises an air resistance inducing unit arranged inside the pretreatment zone 4'. The air resistance inducing unit inside the pretreatment zone 4' comprises a plurality of curtains 41' positioned above the transport device 7. Said plurality of curtains 41' are arranged spaced apart in the transport direction T. As schematically shown in figure 3, the curtains 41' are connected to the top wall of the pretreatment chamber 4, and extend from the top wall downwards towards the transport device 7, preferably, the curtains 41' hang substantially freely down from said top wall. The plurality of curtains 41' in the pretreatment zone 4' provide a resistance against air flow from the tunnel oven entrance 5 towards the baking zone 3', in a similar manner as the baffles 41 in the previously described example with reference to figure 2.

The plurality of curtains 41' are made from a flexible and/or pliable material. When a food product 9 and/or a holder for a food product, such as a baking tray 8, would inadvertently collide with one of the plurality of curtains 41', said curtain 41' can flex or bend out of the way to allow the food product 9 and/or the holder 8 for a food product to pass along. Accordingly, by using a plurality of curtains 41' in the pretreatment zone 4' as an air resistance inducing unit, a congestion or blocking of the tunnel oven 1" due to an inadvertent collision between the food products 9 and/or the holder 8 for a food product and one of said plurality of curtains 41', and any downtime for removing the congestion in the tunnel oven 1", can substantially be avoided. The flexible and/or pliable curtains 41' also allow to configure the curtains such that an edge 43' of said plurality of curtains 41' facing towards the transport device 7, in use, is much closer to the food product 9 and/or the holder 8 for a food product, at least when compared to substantially rigid baffles 41 in the previous example. The smaller gap between the edge 43' of the curtains 41' and the food product 9 and/or holder 8 for the food product can provide an increased resistance against air flow from the tunnel oven entrance 5 towards the baking chamber 3.

The plurality of curtains 41' are arranged to extend in a direction substantially parallel to the width direction of the tunnel oven entrance 5. Accordingly, said curtains 41' extend in a direction substantially perpendicular to an air flow from the tunnel oven entrance 5 towards the baking chamber 3 to provide a substantial equal resistance against air flow over the width of the tunnel oven.

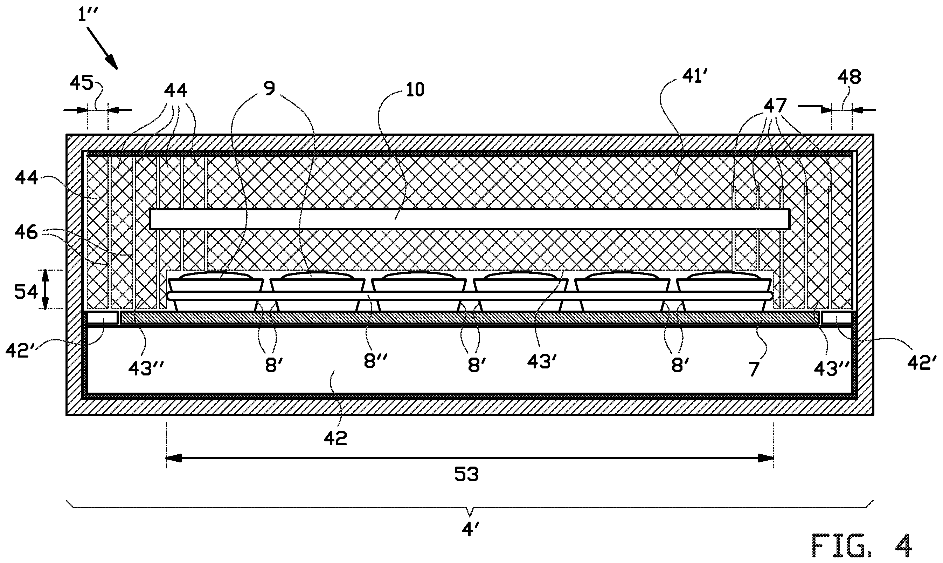

Figure 4 shows a schematic cross-section of the tunnel oven of figure 3 along the line IV-IV. As schematically shown the curtains 41' comprise a cut-out 53, 54 at the side facing away from the top wall. The curtain parts 43" adjacent to said cut-out 53, 54 reaches further down to a position near or touching an upper side of the transport device 7. These curtain parts 43" can, in use, substantially block an air flow adjacent to the food products 9 and/or holders for food products to a large extend. Accordingly, the parts 43" of the plurality of curtains 41' adjacent to the cut-outs 53, 54 provide an increased resistance against air flow from the tunnel oven entrance 5 towards the baking chamber 3.

As schematically shown in figure 4, said cut-out in each one of said plurality of curtains is configured to allow a substantially un-obstructed passage of the dough products 9 and/or the holders for the dough products, such as baking tins 8' or a set of baking tins 8' coupled to each other by means of a coupling member 8". Preferably, said cut-out has a height 54 that is configured such that a gap between an edge 43' the one or more of said plurality of curtains in the cut-out and the upper side of said transport device 7 is in a range of 80 - 140 mm. In particular, the distance between the upper side of said part of the transport device 7 and the distal end 43' of the curtains 41' and the width 53 of the cut-out is chosen to be large enough to allow an un-obstructed passage of the dough products 9 and/or the holders for the dough products, such as baking tins 8'.

As further schematically shown in figure 4, the bottom wall of the pretreatment zone 4' is provided with one or more baffles 42, wherein said one or more baffles 42 are connected to the bottom wall with a proximal end thereof. A distal end of said one or more baffles 42, opposite to the proximal end, is arranged near to a bottom side of said part of the transport device 7, wherein a distance between the bottom side of the transport device 7 and the distal end of the one or more baffles 42 is preferably in a range of 10 - 50 mm. Due to the relatively small distance between the bottom side of the transport device 7 and the distal end of the one or more baffles 42, the generation and/or effectivity of turbulence in the incoming air is enhanced, which results in an enhanced resistance against the flow of air through the pretreatment zone 4', at least along the bottom side of the transport device 7.

In addition, the side walls of the pretreatment zone 4' is provided with one or more baffles 42', wherein said one or more baffles 42' are connected to the corresponding side wall with a proximal end thereof. A distal end of said one or more baffles 42', opposite to the proximal end, is arranged near to a side edge of the transport device 7, wherein a distance between the side edge of the transport device 7 and the distal end of the one or more baffles 42' is preferably in a range of 10 - 50 mm. In an alternative example, the baffles 42' attached to the side walls of the pretreatment zone 4' and the baffle 42 attached to the bottom wall, all arranged at one cross-sectional plane, as for example shown in figure 4, may be formed as an integral part.

As schematically indicated on the left-hand side of figure 4, the curtain 41' may comprise multiple strips 44 which are arranged adjacently in a direction substantially parallel to the width direction of the tunnel oven 1". Preferably the strips 44 have substantially the same width 45. The vertical edges 46 of adjacent strips may be arranged close together to allow a narrow slit or gap between the adjacent strips 44, they may be arranged to substantially abut against each other, or they may be arranged to overlap with the adjacent strip. When using the multiple strips 44 according to this example, the curtain 41' is preferably provided with these strips 44 over its complete width.

As schematically indicated on the right-hand side of figure 4, the curtain 41' may comprise a series of cuts 47 which extend in a substantially vertical direction. Said vertical cuts 47 are arranged spaced apart in a direction substantially parallel to the width direction of the tunnel oven 1". Preferably the distance between adjacent vertical cuts 47 of said series of cuts in the direction substantially parallel to the width direction of the tunnel oven 1", is substantially the same distance 48. When using the multiple cuts 47 according to this example, the curtain 41' is preferably provided with these cuts 47 over its complete width.

It is noted that the strips 44 or cuts 47, if present, are at least provided near the right-hand side and the left-hand side of the pretreatment zone 4', in particular where the edges of the food products 9 and/or the row of baking tins 8' might collide with the curtain 41'. Accordingly, at least the central part of the curtain 41' may not be provided with strips 44 or cuts 47. Also, a curtain 41' without any strips 44 or cuts 47 may be employed as air resistance inducing unit inside the pretreatment chamber 4'.

It is noted that in all of the examples in the figures, the pretreatment zone 4' is not provided with an air exhaust, in particular the pretreatment zone 4' is not provided with an air exhaust at or near the top wall of the pretreatment chamber 4. The air exhaust 2 for extracting air from the baking zone 3' is arranged spaced apart from the pretreatment zone 4', in particular the air exhaust 2 for extracting air from the baking zone is arranged at side of the baking chamber 3 facing away from the pretreatment zone 4', in particular near the tunnel oven exit 6.

In summary, the invention relates to a tunnel oven for baking food product, said tunnel oven comprises:
a tunnel oven entrance, a tunnel oven exit and a baking zone inside said tunnel oven,
a transport device configured for transporting food products through the tunnel oven entrance, the backing zone and the tunnel oven exit,
a heating source arranged in the baking zone,
a pretreatment zone, arranged between the baking zone and the tunnel oven entrance, which comprises an injector configured for injecting a pretreatment agent into the pretreatment zone,
an air exhaust for extracting air from the baking zone, comprises a flow regulator and a sensor for detecting the presence and/or an amount of pretreatment agent in the air exhaust, and
a control device configured for receiving a signal from the sensor, and configured for controlling the flow regulator in the air exhaust to reduce the rate of air extraction when an amount of pretreatment agent is detected by the sensor.

## Claims

1. A tunnel oven (1) for the preparation of food product, in particular dough products, wherein the tunnel oven comprises:
a tunnel oven entrance (5), a tunnel oven exit (6) and a baking zone (3') inside said tunnel oven between the tunnel oven entrance and the tunnel oven exit,
a transport device (7) configured for transporting food products (9) through the tunnel oven entrance, the backing zone and the tunnel oven exit,
a heating source arranged for providing heat to food products in the baking zone,
a pretreatment zone (4') arranged between the baking zone and the tunnel oven entrance, wherein the pretreatment zone comprises an injector (10) configured for injecting a pretreatment agent into the pretreatment zone,
an air exhaust (2) configured for extracting air from the baking zone, wherein the air exhaust comprises a flow regulator (15, 18),
**characterized in that** the air exhaust further comprises a sensor (16, 16', 16'') for detecting the presence and/or an amount of pretreatment agent in the air exhaust, and
wherein the tunnel oven further comprises a control device (17) configured for receiving a signal from the sensor, and configured for controlling the flow regulator in the air exhaust based on said signal.

2. The tunnel oven according to claim 1, wherein the flow regulator comprises an exhauster, preferably a motor-driven fan (15), and/or a regulating valve (18).

3. The tunnel oven according to claim 1 or 2, wherein the sensor is arranged in a duct (20) of the air exhaust, between the flow regulator and a connecting opening of said duct into the baking zone.

4. The tunnel oven according to claim 1, 2 or 3, wherein the sensor comprises a dew point sensor, a humidity sensor and/or a combination of a wet-bulb temperature sensor and a dry-bulb temperature sensor.

5. The tunnel oven according to any one of the claims 1 - 4, wherein the pretreatment zone (4') comprises an air resistance inducing unit configured for providing a resistance against air flow from the tunnel oven entrance, through the pretreatment zone, towards the baking zone.

6. The tunnel oven according to claim 5, wherein the pretreatment zone comprises a bottom wall, a top wall and two side walls which surround a part of the transport device that is configured for transporting the food products through the pretreatment zone of the tunnel oven, wherein the air resistance inducing unit comprises at least one baffle or curtain (41, 41', 42), wherein said at least one baffle or curtain is arranged to extend in a direction substantially perpendicular to a transport direction of the transport device, preferably wherein said at least one baffle or curtain is connected to said top wall, and wherein said at least one curtain extends from the top wall towards said part of the transport device.

7. The tunnel oven according to claim 6, wherein said at least one baffle or curtain comprises a cut-out (53) at the side facing away from the top wall, wherein the curtain part adjacent to said cut-out reaches to a position near or touching an upper side of the transport device.

8. The tunnel oven according to claim 7, wherein said cut-out in said at least one baffle or curtain is configured to allow a substantially un-obstructed passage of the dough products and/or holders (8) for the dough products, such as baking tins, and/or wherein said cut-out is configured such that a gap between an edge the at least one curtain in the cut-out and the upper side of said transport device is in a range of 80 - 140 mm.

9. The tunnel oven according to any one of the claims 6, 7 or 8, wherein said at least one curtain comprises multiple strips (44) which are arranged adjacently in the direction substantially perpendicular to the transport direction of the transport device, preferably wherein a width of two or more strips of said multiple strips is substantially the same in the direction substantially perpendicular to the transport direction of the transport device.

10. The tunnel oven according to any one of the claims 6 - 9, wherein said at least one curtain comprises a series of cuts (47) which extend in a substantially vertical direction and wherein said cuts are arranged spaced apart in a direction substantially perpendicular to the transport direction of the transport device, preferably wherein a distance between adjacent cuts of said series of cuts in the a direction substantially perpendicular to the transport direction of the transport device, is substantially the same.

11. The tunnel oven according to any one of the claims 5 - 10, wherein said air resistance inducing unit, comprises a plurality of baffles or curtains (41, 41', 42) arranged inside said pretreatment zone, wherein said plurality of curtains are arranged spaced apart in a direction from the tunnel oven entrance and towards the baking zone.

12. The tunnel oven according to any one of the claims 5 - 11, wherein said bottom wall is provided with one or more baffles (42), wherein said one or more baffles are connected to the bottom wall with a proximal end thereof, wherein a distal end of said one or more baffles, opposite to the proximal end, is arranged near to a bottom side of said part of the transport device, preferably wherein a distance between the bottom side of said part of the transport device and the distal end of the one or more baffles is in a range of 10 - 50 mm.

13. A method for controlling a tunnel oven according to any one of the claims 1 - 12, wherein the method comprises the steps of:
- sending a signal that corresponds to a dew point, temperature and/or humidity of the air inside the air exhaust from the sensor (16) to the control device (17);
- controlling the flow regulator (15, 18) in the air exhaust (2) by means of the control device, wherein said controlling is based on said signal.

14. The method according to claim 13, wherein the control device compares the signal with a threshold value, and when the signal is larger than the threshold value, the control device controls the flow regulator for reducing an air flow in the air exhaust, and/or
wherein the flow regulator comprises a motor-driven fan (15), and wherein the step of controlling the flow regulator comprises a step of adjusting a rotational speed of the fan and/or a pitch of the blades of the fan, and/or
wherein the flow regulator comprises a regulating valve (18) comprising a valve opening, and wherein the step of controlling the flow regulator comprises a step of adjusting the valve opening.

15. Computer-readable medium having computer-executable instructions adapted to cause a computer of a control device of a tunnel oven according to any one of the claims 1 - 12 to perform the method according to claim 13 or 14.

## Patentansprüche

1. Tunnelofen (1) für die Zubereitung von Lebensmitteln, insbesondere Teigwaren, wobei der Tunnelofen umfasst:
einen Tunnelofeneingang (5), einen Tunnelofenausgang (6) und eine Backzone (3') innerhalb des Tunnelofens zwischen dem Tunnelofeneingang und dem Tunnelofenausgang,
eine Transportvorrichtung (7), die ausgebildet ist, Lebensmitteln (9) durch den Tunnelofeneingang, die Backzone und den Tunnelofenausgang zu transportieren,
eine Heizquelle, die angeordnet ist, Wärme für Lebensmittel in der Backzone bereitzustellen,
eine Vorbehandlungszone (4'), die zwischen der Backzone und dem Tunnelofeneingang angeordnet ist, wobei die Vorbehandlungszone einen Injektor (10) umfasst, die ausgebildet ist, ein Vorbehandlungsmittel in die Vorbehandlungszone zu injizieren,
einen Luftauslass (2), der ausgebildet ist, Luft aus der Backzone zu entziehen, wobei der Luftauslass einen Strömungsregler (15, 18) umfasst,
**dadurch gekennzeichnet, dass** der Luftauslass weiter einen Sensor (16, 16', 16'') zum Erfassen des Vorhandenseins und/oder der Menge des Vorbehandlungsmittels im Luftauslass umfasst, und
wobei der Tunnelofen weiter eine Steuervorrichtung (17) umfasst, die ausgebildet ist, ein Signal vom Sensor zu empfangen und, die ausgebildet ist, den Strömungsregler im Luftauslass auf der Grundlage des Signals zu steuern.

2. Tunnelofen nach Anspruch 1, wobei der Strömungsregler einen Ausströmer, vorzugsweise einen motorbetriebenen Ventilator (15), und/oder ein Regelventil (18) umfasst.

3. Tunnelofen nach Anspruch 1 oder 2, wobei der Sensor in einem Kanal (20) des Luftaustritts zwischen dem Strömungsregler und einer Verbindungsöffnung des Kanals in die Backzone angeordnet ist.

4. Tunnelofen nach Anspruch 1, 2 oder 3, wobei der Sensor einen Taupunktsensor, einen Feuchtigkeitssensor und/oder eine Kombination aus einem Feuchtkugeltemperatursensor und einem Trockenkugeltemperatursensor umfasst.

5. Tunnelofen nach einem der Ansprüche 1 bis 4, wobei die Vorbehandlungszone (4') eine Luftwiderstandseinheit umfasst, die ausgebildet ist, einen Widerstand gegen eine Luftströmung vom Tunnelofeneingang durch die Vorbehandlungszone in Richtung der Backzone bereitzustellen.

6. Tunnelofen nach Anspruch 5, wobei die Vorbehandlungszone eine Bodenwand, eine obere Wand und zwei Seitenwände umfasst, die einen Teil der Transportvorrichtung umgeben, die ausgebildet ist, die Lebensmittelprodukte durch die Vorbehandlungszone des Tunnelofens zu transportieren, wobei die Luftwiderstandseinheit mindestens ein Leitblech oder einen Vorhang (41, 41', 42) umfasst, wobei das mindestens eine Leitbleche oder der Vorhang angeordnet ist, sich in einer Richtung zu erstrecken, die im Wesentlichen senkrecht zu einer Transportrichtung der Transportvorrichtung ist, wobei vorzugsweise das mindestens eine Leitbleche oder der Vorhang mit der oberen Wand verbunden ist und wobei sich der mindestens eine Vorhang von der oberen Wand zu dem Teil der Transportvorrichtung erstreckt.

7. Tunnelofen nach Anspruch 6, wobei das mindestens eine Leitblech oder der Vorhang einen Ausschnitt (53) an der von der oberen Wand abgewandten Seite aufweist, wobei der Teil des Vorhangs, der an den Ausschnitt angrenzt, bis zu einer Position in der Nähe oder in Berührung mit einer Oberseite der Transportvorrichtung reicht.

8. Tunnelofen nach Anspruch 7, wobei der Ausschnitt in dem mindestens einen Leitbleche oder dem Vorhang ausgebildet ist, um einen im Wesentlichen ungehinderten Durchgang der Teigprodukte und/oder Halterungen (8) für die Teigprodukte, wie beispielsweise Backformen, zu erlauben, und/oder wobei der Ausschnitt ausgebildet ist, so dass ein Abstand zwischen einer Kante des mindestens einen Vorhangs in dem Ausschnitt und der Oberseite der Transportvorrichtung in einem Bereich von 80 bis 140 mm liegt.

9. Tunnelofen nach einem der Ansprüche 6, 7 oder 8, wobei der mindestens eine Vorhang mehrere Streifen (44) umfasst, die angrenzend an die Richtung angeordnet sind, die im Wesentlichen senkrecht zur Transportrichtung der Transportvorrichtung ist, wobei vorzugsweise eine Breite von zwei oder mehr Streifen der mehreren Streifen in der Richtung im Wesentlichen senkrecht zur Transportrichtung der Transportvorrichtung im Wesentlichen gleich ist.

10. Tunnelofen nach einem der Ansprüche 6 bis 9, wobei der mindestens eine Vorhang eine Reihe von Schnitten (47) umfasst, die sich in einer im Wesentlichen vertikalen Richtung erstrecken, und wobei die Schnitte in einer Richtung im Wesentlichen senkrecht zur Transportrichtung der Transportvorrichtung beabstandet angeordnet sind, wobei vorzugsweise ein Abstand zwischen benachbarten Schnitten der Reihe von Schnitten in der Richtung im Wesentlichen senkrecht zur Transportrichtung der Transportvorrichtung im Wesentlichen gleich ist.

11. Tunnelofen nach einem der Ansprüche 5 bis 10, wobei die Luftwiderstandseinheit eine Vielzahl von Leitblechen oder Vorhängen (41, 41', 42) umfasst, die innerhalb der Vorbehandlungszone angeordnet sind, wobei die Vielzahl von Vorhängen in einer Richtung vom Tunnelofeneingang zur Backzone hin beabstandet angeordnet ist.

12. Tunnelofen nach einem der Ansprüche 5 bis 11, wobei die Bodenwand mit einer oder mehreren Leitblechen (42) versehen ist , wobei das eine oder mehreren Leitbleche mit einem proximalen Ende mit der Bodenwand verbunden sind, wobei ein distales Ende des einen oder mehreren Leitbleche, das dem proximalen Ende gegenüberliegt, in der Nähe einer Unterseite dieses Teils der Transportvorrichtung angeordnet ist, wobei vorzugsweise ein Abstand zwischen der Unterseite dieses Teils der Transportvorrichtung und dem distalen Ende der einen oder mehreren Leitbleche in einem Bereich von 10 bis 50 mm liegt.

13. Verfahren zum Steuern eines Tunnelofens gemäß einem der Ansprüche 1 bis 12, wobei das Verfahren die Schritte umfasst:
Senden eines Signals, das einem Taupunkt, einer Temperatur und/oder einer Feuchtigkeit der Luft innerhalb des Luftauslasses entspricht, von dem Sensor (16) an die Steuervorrichtung (17);
Steuern des Strömungsreglers (15, 18) im Luftauslass (2) mittels der Steuervorrichtung, wobei die Steuerung auf dem Signal basiert.

14. Verfahren nach Anspruch 13, wobei die Steuervorrichtung das Signal mit einem Grenzwert vergleicht und, wenn das Signal größer als der Grenzwert ist, die Steuervorrichtung den Strömungsregler steuert, um einen Luftstrom im Luftauslass zu reduzieren, und/oder
wobei der Strömungsregler einen motorbetriebenen Ventilator (15) umfasst, und wobei der Schritt des Steuerns des Strömungsreglers einen Schritt des Anpassens einer Drehzahl des Ventilators und/oder eines Anstellwinkels der Flügel des Ventilators umfasst, und/oder
wobei der Strömungsregler ein Regelventil (18) umfasst, das eine Ventilöffnung umfasst, und wobei der Schritt des Steuerns des Strömungsreglers einen Schritt des Anpassens der Ventilöffnung umfasst.

15. Computerlesbares Medium, das computerausführbare Anweisungen aufweist, die ausgelegt sind, einen Computer einer Steuervorrichtung eines Tunnelofens gemäß einem der Ansprüche 1 bis 12 zu veranlassen, das Verfahren gemäß Anspruch 13 oder 14 auszuführen.

## Revendications

1. Four tunnel (1) pour la préparation de produits alimentaires, en particulier de produits à base de pâte, dans lequel le four tunnel compren:
une entrée de four tunnel (5), une sortie de four tunnel (6) et une zone de cuisson (3') à l'intérieur dudit four tunnel entre l'entrée de four tunnel et la sortie de four tunnel,
un dispositif de transport (7) configuré pour transporter des produits alimentaires (9) à travers l'entrée de four tunnel, la zone de cuisson et la sortie de four tunnel,
une source de chaleur disposée pour fournir de la chaleur aux produits alimentaires dans la zone de cuisson;
une zone de prétraitement (4') disposée entre la zone de cuisson et l'entrée de four tunnel, la zone de prétraitement comprenant un injecteur (10) configuré pour injecter un agent de prétraitement dans la zone de prétraitement,
un échappement d'air (2) configurée pour extraire de l'air à partir de la zone de cuisson, l'échappement d'air comprenant un régulateur de débit (15, 18),
**caractérisé par le fait que** l'échappement d'air comprend en outre un capteur (16, 16', 16'') pour détecter la présence et/ou une quantité d'agent de prétraitement dans l'échappement d'air, et
dans lequel le four tunnel comprend en outre un dispositif de commande (17) configuré pour recevoir un signal à partir du capteur, et configuré pour commander le régulateur de débit dans l'échappement d'air sur la base dudit signal.

2. Four tunnel selon la revendication 1, dans lequel le régulateur de débit comprend un extracteur, de préférence un ventilateur entraîné par moteur (15), et/ou une vanne de régulation (18).

3. Four tunnel selon la revendication 1 ou 2, dans lequel le capteur est disposé dans un conduit (20) de l'échappement d'air, entre le régulateur de débit et une ouverture de raccordement dudit conduit dans la zone de cuisson.

4. Four tunnel selon la revendication 1, 2 ou 3, dans lequel le capteur comprend un capteur de point de rosée, un capteur d'humidité et/ou une combinaison d'un capteur de température à bulbe humide et d'un capteur de température à bulbe sec.

5. Four tunnel selon l'une quelconque des revendications 1 à 4, dans lequel la zone de prétraitement (4') comprend une unité induisant une résistance à l'air configurée pour fournir une résistance à l'encontre de l'écoulement d'air provenant de l'entrée de four tunnel, à travers la zone de prétraitement, vers la zone de cuisson.

6. Four tunnel selon la revendication 5, dans lequel la zone de prétraitement comprend une paroi inférieure, une paroi supérieure et deux parois latérales qui entourent une partie du dispositif de transport qui est configuré pour transporter les produits alimentaires à travers la zone de prétraitement du four tunnel, l'unité induisant une résistance à l'air comprenant au moins un déflecteur ou rideau (41, 41', 42), ledit au moins un déflecteur ou rideau étant disposé pour s'étendre dans une direction sensiblement perpendiculaire à une direction de transport du dispositif de transport, de préférence ledit au moins un déflecteur ou rideau étant relié à ladite paroi supérieure, et ledit au moins un rideau s'étendant à partir de la paroi supérieure vers ladite partie du dispositif de transport.

7. Four tunnel selon la revendication 6, dans lequel ledit au moins un déflecteur ou rideau comprend une découpe (53) sur le côté tourné à l'opposé de la paroi supérieure, la partie de rideau adjacente à ladite découpe atteignant une position proche ou touchant un côté supérieur du dispositif de transport.

8. Four tunnel selon la revendication 7, dans lequel ladite découpe dans ledit au moins un déflecteur ou rideau est configuré pour permettre un passage sensiblement non obstrué des produits à base de pâte et/ou de supports (8) pour les produits à base de pâte, tels que des moules à gâteaux, et/ou dans lequel ladite découpe est configurée de telle sorte qu'un espacement entre un bord de l'au moins un rideau dans la découpe et le côté supérieur dudit dispositif de transport se situe dans une plage de 80 à 140 mm.

9. Four tunnel selon l'une quelconque des revendications 6, 7 ou 8, dans lequel ledit au moins un rideau comprend plusieurs bandes (44) qui sont disposées de manière adjacente dans la direction sensiblement perpendiculaire à la direction de transport du dispositif de transport, de préférence dans lequel une largeur de deux bandes ou plus desdites plusieurs bandes est sensiblement la même dans la direction sensiblement perpendiculaire à la direction de transport du dispositif de transport.

10. Four tunnel selon l'une quelconque des revendications 6 à 9, dans lequel ledit au moins un rideau comprend une série de coupes (47) qui s'étendent dans une direction sensiblement verticale et dans lequel lesdites coupes sont disposées espacées dans une direction sensiblement perpendiculaire à la direction de transport du dispositif de transport, de préférence dans lequel une distance entre des coupes adjacentes de ladite série de coupes dans la direction sensiblement perpendiculaire à la direction de transport du dispositif de transport est sensiblement la même.

11. Four tunnel selon l'une quelconque des revendications 5 à 10, dans lequel l'unité induisant une résistance à l'air comprend une pluralité de déflecteurs ou rideaux (41, 41', 42) disposés à l'intérieur de ladite zone de prétraitement, ladite pluralité de rideaux étant disposés espacés dans une direction à partir de l'entrée de four tunnel et vers la zone de cuisson.

12. Four tunnel selon l'une quelconque des revendications 5 à 11, dans lequel ladite paroi inférieure comporte un ou plusieurs déflecteurs (42), dans lequel ledit ou lesdits déflecteurs sont reliés à la paroi inférieure par leur extrémité proximale, dans lequel une extrémité distale dudit ou desdits déflecteurs, opposée à l'extrémité proximale, est disposée à proximité d'un côté inférieur de ladite partie du dispositif de transport, de préférence dans lequel une distance entre le côté inférieur de ladite partie du dispositif de transport et l'extrémité distale dudit ou desdits déflecteurs se situe dans une plage de 10 à 50 mm.

13. Procédé de commande d'un four tunnel selon l'une quelconque des revendications 1 à 12, dans lequel le procédé comprend les étapes consistant à:
- envoyer un signal correspondant à un point de rosée, une température et/ou une humidité de l'air à l'intérieur de l'échappement d'air du capteur (16) au dispositif de commande (17);
- commander le régulateur de débit (15, 18) dans l'échappement d'air (2) au moyen du dispositif de commande, ladite commande étant basée sur ledit signal.

14. Procédé selon la revendication 13, dans lequel le dispositif de commande compare le signal à une valeur de seuil, et lorsque le signal est supérieur à la valeur de seuil, le dispositif de commande commande le régulateur de débit pour qu'il réduise le débit d'air dans l'échappement d'air, et/ou
dans lequel le régulateur de débit comprend un ventilateur entraîné par moteur (15), et dans lequel l'étape de commande du régulateur de débit comprend une étape de réglage d'une vitesse de rotation du ventilateur et/ou d'un pas des pales du ventilateur, et/ou
dans lequel le régulateur de débit comprend une vanne de régulation (18) comprenant une ouverture de vanne, et dans lequel l'étape de commande du régulateur de débit comprend une étape de réglage de l'ouverture de vanne.

15. Support lisible par ordinateur ayant des instructions exécutables par ordinateur aptes à amener un ordinateur d'un dispositif de commande d'un four tunnel selon l'une quelconque des revendications 1 à 12 à effectuer le procédé selon la revendication 13 ou 14.
